# EUROPÄISCHE PATENTSCHRIFT

(11) **EP 3 814 157 B1**
(45) Veröffentlichungstag und Bekanntmachung des Hinweises auf die Patenterteilung: **26.04.2023**
(21) Anmeldenummer: 19734327.0
(22) Anmeldetag: 21.06.2019
(51) Int. Cl.: B60G 17/015

(54) **CHASSIS-LUFTFEDERUNGSEINRICHTUNG ZUR ABSTÜTZUNG EINES CHASSIS EINES NUTZFAHRZEUGS AN EINEM FAHRWERK EINSCHLIESSLICH NIVEAUREGELUNG**
CHASSIS AIR-SUSPENSION DEVICE FOR SUPPORTING A CHASSIS OF A UTILITY VEHICLE ON RUNNING GEAR, INCLUDING LEVEL CONTROL
SYSTÈME DE SUSPENSION PNEUMATIQUE DE CHÂSSIS POUR LE SUPPORT D'UN CHÂSSIS DE VÉHICULE UTILITAIRE SUR UN TRAIN DE ROULEMENT, COMPRENANT UNE RÉGULATION DE NIVEAU

(30) Priorität: 26.06.2018 DE 102018115340
(43) Veröffentlichungstag der Anmeldung: 05.05.2021
(73) Patentinhaber: KNORR-BREMSE Systeme für Nutzfahrzeuge GmbH, 80809 München (DE)
(72) Erfinder: JAKAB, David, 6000 Kecskemet (HU); KANDAR, Tibor, 8096 Sukoro (DE); CSONTOS, Peter, 1119 Budapest (HU); HOFMANN, Ken, 70771 Leinfelden-Echterdingen (DE); BOHLEY, Martin, 71739 Oberriexingen (DE)
(86) Internationale Anmeldenummer: PCT/EP2019/066472
(87) Internationale Veröffentlichungsnummer: WO 2020/002151

(56) Entgegenhaltungen:
- EP-A1- 3 072 716
- DE-A1- 10 245 815
- DE-A1-102008 051 546
- DE-T2-602004 002 668
- US-A1- 2002 035 423
- US-A1- 2006 267 297
- US-A1- 2014 375 002
- US-A1- 2015 273 972
- ANONYMOUS: "Chassis level system configuration for four-corner leveling", RESEARCH DISCLOSURE, KENNETH MASON PUBLICATIONS, HAMPSHIRE, UK, GB, Bd. 483, Nr. 53, 1. Juli 2004 (2004-07-01) , XP007134039, ISSN: 0374-4353

## Beschreibung

Die Erfindung betrifft eine Chassis-Luftfederungseinrichtung zur Abstützung eines Chassis eines Nutzfahrzeugs an einem Fahrwerk einschließlich Niveauregelung gemäß Anspruch 1 sowie ein Fahrzeug mit einer solchen Chassis-Luftfederungseinrichtung gemäß Anspruch 10.

Bei solchen Chassis-Luftfederungseinrichtungen wird durch Veränderung des Balgdrucks in den Luftfederbälgen unabhängig vom Beladungszustand bzw. der Beladungsverteilung des Nutzfahrzeugs stets das vorgegebene Soll-Niveau des Chassis (Fahrzeugaufbau) in Bezug zur Fahrbahn bzw. dem Fahrwerk eingestellt. Damit bleiben die Einstiegs- oder Beladungshöhe des Nutzfahrzeugs sowie die Scheinwerfereinstellung konstant. Weiterhin bleibt auch der Federungskomfort über den Beladungsbereich durch Veränderung der Luftfederbalgdrücke nahezu gleich. Weiterhin lässt sich für ein Be- und Entladen des Nutzfahrzeugs an Rampen der ein gewünschtes Ladeniveau als Soll-Niveau einstellen. Das bei Linienbussen häufig geforderte Absenken (Kneeling) an Haltestellen kann beispielsweise durch ein gezieltes Entlüften der Luftfederbälge an der rechten Fahrzeugseite bewerkstelligt werden.

Aus dem Stand der Technik bekannt sind zentral aufgebaute Chassis-Luftfederungseinrichtungen, bei welchen ein zentrales elektronisches Steuergerät Magnetventileinrichtungen steuert, um an Abschnitten des Chassis jeweils ein bestimmtes Soll-Niveau einzuregeln. Hierzu sind an den verschiedenen Abschnitten des Chassis, beispielsweise im Bereich eines jeden Rades jeweils Niveausensoren angeordnet, welche jeweils ein ein Ist-Niveau des betreffenden Abschnitts des Chassis charakterisierendes Ist-Niveausignal erzeugen und dann über jeweils eine Signalleitung in das zentrale elektronische Steuergerät einsteuert, welches dann auf der Basis der Ist-Niveausignale durch Ansteuerung der Magnetventileinrichtungen einen Soll-Niveau/Ist-Niveau-Abgleich vornimmt. Hierzu ist das zentrale elektronische Steuergerät über eine Anzahl von Signalleitungen mit den Magnetventileinrichtungen verbunden. Insgesamt sind daher bei mehreren Abschnitten des Chassis, deren Ist-Niveau auf das Soll-Niveau geregelt werden soll, eine Vielzahl von elektrischen Verbindungen in Form von Signalleitungen notwendig, deren Verlegung am Nutzfahrzeug mit einem gewissen Aufwand verbunden ist. Außerdem kann es durch Kontaktprobleme der Signalleitungen zu einem Ausfall der Luftfederungseinrichtung bzw. der Niveauregelung kommen.

Eine gattungsgemäße Chassis-Luftfederungseinrichtung wird in DE 60 2004 002668 T2, EP 3 072 716 A1, US 2006/267297 A1, DE 10 2008 051 546 A1, US 2002/035423 A1, US 2014/375002 A1 und US 20157273972 A1 beschrieben.

Eine Chassis-Luftfederungseinrichtung wird auch in "Chassis level system configuration for four-corner leveling", XP007134039 , 2004-07-01, Research Disclosure, 2004-07-01, Kenneth Mason Publications, Hampshire, UK, GB beschrieben.

Der vorliegenden Erfindung liegt die Aufgabe zugrunde, eine Chassis-Luftfederungseinrichtung zur Abstützung eines Chassis eines Nutzfahrzeugs an einem Fahrwerk einschließlich Niveauregelung derart weiter zu entwickeln, dass sie einfacher zu montieren und zuverlässiger ist. Weiterhin soll auch ein Fahrzeug mit einer solchen Chassis-Luftfederungseinrichtung zur Verfügung gestellt werden.

Diese Aufgabe durch die Merkmale der Ansprüche 1 und 10 gelöst.

### Offenbarung der Erfindung

Die Erfindung geht aus von einer Chassis-Luftfederungseinrichtung zur Abstützung eines Chassis eines Nutzfahrzeugs an einem Fahrwerk einschließlich Niveauregelung, welche wenigstens Folgendes beinhaltet:
a) wenigstens ein zentrales elektronisches Steuergerät, welches wenigstens ein ein Soll-Niveau für wenigstens einen Abschnitt des Chassis charakterisierendes Soll-Niveausignal vorgibt,
b) wenigstens einen Niveausensor, welcher ein ein Ist-Niveau des wenigstens einen Abschnitts des Chassis charakterisierendes Ist-Niveausignal erzeugt,
c) wenigstens einen Luftfederbalg, durch welchen der wenigstens eine Abschnitt des Chassis gegenüber dem Fahrwerk abgestützt ist,
d) wenigstens ein Druckluftreservoir.

Unter einem Nutzfahrzeug soll hier ein angetriebenes Nutzfahrzeug wie etwa ein Zugfahrzeug, ein nicht angetriebenes Nutzfahrzeug wie etwa ein Anhänger und auch eine Zugfahrzeug-Anhänger-Kombination verstanden werden.

Unter dem Adjektiv "zentral" innerhalb des Begriffs "zentrales Steuergerät" ist gemeint, dass durch oder über das zentrale Steuergerät das Soll-Niveau oder das Soll-Niveausignal im Sinne eines Master-Steuergeräts vorgegeben wird. Insofern bildet das zentrale Steuergerät eine "Zentrale" aus. Nicht gemeint mit dem Adjektiv "zentral" ist hingegen etwa eine zentrale Anordnung am oder im Fahrzeug.

Weiterhin geht die Erfindung davon aus, dass
e) die Chassis-Luftfederungseinrichtung modular aufgebaut ist und als Module wenigstens das zentrale elektronische Steuergerät und zusätzlich wenigstens ein als separate Baueinheit ausgeführtes elektropneumatisches Luftfederungs-Modul beinhaltet, wobei
f) das wenigstens eine elektropneumatische Luftfederungs-Modul mit einer integrierten Modul-Magnetventileinrichtung und mit einem die Modul-Magnetventileinrichtung steuernden integrierten elektronischen Modul-Steuergerät versehen ist, wobei das elektronische Modul-Steuergerät das das wenigstens eine Soll-Niveausignal und das das wenigstens eine Ist-Niveausignal verarbeitet, und wobei
g) die Modul-Magnetventileinrichtung an den wenigstens einen Luftfederbalg sowie das das wenigstens eine Druckluftreservoir angeschlossen ist, und wobei
h) das elektronische Modul-Steuergerät ausgebildet ist, dass es die Modul-Magnetventileinrichtung abhängig von dem wenigstens einen Ist-Niveausignal und dem wenigstens einen Soll-Niveausignal derart steuert, dass durch Belüften des wenigstens einen Luftfederbalgs mit Druckluft aus dem wenigstens einen Druckluftreservoir oder durch Entlüften des wenigstens einen Luftfederbalgs in eine Drucksenke das Ist-Niveau des wenigstens einen Abschnitts des Chassis an das Soll-Niveau angepasst wird.

Unter einem elektropneumatischen Luftfederungs-Modul soll daher eine Baueinheit insbesondere mit einem eigenen Gehäuse verstanden werden, welche separat beispielsweise an einem Rahmen des Nutzfahrzeugs ein- und ausgebaut werden kann.

Mit anderen Worten sind dann in dem elektronischen Modul-Steuergerät des elektropneumatischen Luftfederungs-Moduls Niveauregelroutinen integriert, durch welche des Ist-Niveau wenigstens eines Abschnitts des Chassis auf das Soll-Niveau einstellbar oder im Sinne eines Closed-Loop regelbar ist. Daher wird das von dem wenigstens einen, an das betreffende elektropneumatische Luftfederungs-Modul angeschlossenen Niveausensor erfasste Ist-Niveau von dem Modul Steuergerät des betreffenden elektropneumatischen Luftfederungs-Moduls an das von der zentralen Steuereinrichtung vorgegebene Soll-Niveau angepasst, indem die Modul-Magnetventileinrichtung des betreffenden elektropneumatischen Luftfederungs-Moduls von dem Modul-Steuergerät angesteuert wird, um die Modul-Magnetventileinrichtung anzusteuern, dass die an das betreffende elektropneumatische Luftfederungs-Modul angeschlossenen Luftfederbälge entsprechend be- oder entlüftet werden. Die Vorgabe des Soll-Niveaus findet daher zentral innerhalb der zentralen elektronischen Steuereinrichtung statt, während die Niveauregelung lokal oder dezentral innerhalb des wenigstens einen elektropneumatischen Luftfederungs-Moduls stattfindet.

Dann ist im Gegensatz zu einer zentral aufgebauten Chassis-Luftfederungseinrichtung des Stands der Technik die erfindungsgemäße Chassis-Luftfederungseinrichtung dezentral aufgebaut, als die Niveauregelung des Niveaus des wenigstens einen Abschnitts des Chassis nun nicht mehr innerhalb eines zentralen elektronischen Steuergeräts sondern innerhalb wenigstens eines als Baueinheit ausgeführten elektropneumatischen Luftfederungs-Modul stattfindet und das zentrale elektronische Steuergerät dabei das Soll-Niveau vorgibt.

Folglich muss hierzu lediglich wenigstens eine Signalleitung zwischen dem wenigstens einen, dem jeweiligen elektropneumatischen Luftfederungs-Modul zugeordneten Niveausensor und dem elektropneumatischen Luftfederungs-Modul gezogen werden, welches beispielsweise in räumlicher Nähe in Bezug zu dem hinsichtlich des Niveaus zu regelnden Abschnitt oder in Bezug zu den hinsichtlich des Niveaus zu regelnden Abschnitten des Chassis angeordnet werden kann, was gegenüber dem Stand der Technik kürzere Signalleitungen bedingt, welche dann nicht mehr quer durch das gesamte Nutzfahrzeug gezogen werden müssen. Für die Kommunikation zwischen dem zentralen elektronischen Steuergerät und dem wenigstens einen elektropneumatischen Luftfederungs-Modul bzw. dessen integrierten elektronischen Modul-Steuergerät ist dann lediglich eine Leitung, beispielsweise in Form einer Datenbusleitung notwendig. Dies bedingt einen geringeren Montageaufwand der Chassis-Luftfederungseinrichtung.

Weiterhin kann ein solches elektropneumatisches Luftfederungs-Modul auch eigenständig und unabhängig getestet werden, was die Ausfallsicherheit der Luftfederungseinrichtung erhöht.

Erfindungsgemäß sind das zentrale elektronische Steuergerät und das elektronische Modul-Steuergerät des wenigstens einen elektropneumatischen Luftfederungsmoduls an einen eigenen, von weiteren Datenbussen (z.B. Fahrzeugdatenbus) unabhängigen Luftfederungs-Datenbus angeschlossen und können lediglich über diesen eigenen Luftfederungs-Datenbus miteinander kommunizieren. Dann kann das zentrale elektronisches Steuergerät die Kommunikation mit den weiteren elektronischen Steuergeräten des Fahrzeugs beispielsweise über den Fahrzeugdatenbus führen, wobei dann die lokalen Modul-Steuergeräte der elektropneumatischen Luftfederungs-Module hinter dem zentralen elektronischen Steuergerät "verborgen sind". Die Luftfederungseinrichtung wird dann in Bezug auf die Kommunikation mit den weiteren elektronischen Steuergeräten des Fahrzeugs lediglich durch das zentrale elektronische Steuergerät repräsentiert.

Insbesondere sind daher das zentrale elektronische Steuergerät und das elektronische Modul-Steuergerät des wenigstens einen elektropneumatischen Luftfederungsmoduls datenbusfähig ausgebildet.

Weiterhin erfindungsgemäß stellen das zentrale elektronische Steuergerät ein Master-Steuergerät und das elektronische Modul-Steuergerät des wenigstens einen elektropneumatischen Luftfederungs-Moduls ein Slave-Steuergerät dar (Master/Slave-Prinzip). Demnach hat lediglich das zentrale elektronische Steuergerät das Recht, unaufgefordert auf gemeinsame Ressourcen zuzugreifen. Das wenigstens eine elektronische Modul-Steuergerät (Slave) kann von sich aus nicht auf die gemeinsame Ressource zugreifen, sondern muss warten bis es vom zentralen elektronischen Steuergerät (Master) dazu aufgefordert oder gefragt wird (Polling). Wie oben bereits ausgeführt können dann insbesondere das zentrale elektronische Steuergerät als Master-Steuergerät und in Bezug zu diesem das elektronische Modul-Steuergerät des wenigstens einen elektropneumatischen Luftfederungs-Moduls als Slave-Steuergerät an einen eigenen und separaten Luftfederungs-Datenbus angeschlossen sein und lediglich über diesen Luftfederungs-Datenbus miteinander kommunizieren.

Durch die in den Unteransprüchen aufgeführten Maßnahmen sind vorteilhafte Weiterbildungen und Verbesserungen des ersten Aspekts der Erfindung möglich.

Gemäß einer bevorzugten Ausführungsform der Chassis-Luftfederungseinrichtung dann das elektropneumatische Luftfederungs-Modul ein separates Gehäuse mit wenigstens folgenden Anschlüssen aufweisen:
a) wenigstens einen elektrischen Signalanschluss zum Einsteuern des wenigstens einen Ist-Niveausignals des Niveausensors.
b) wenigstens einen Kommunikationsanschluss für die Kommunikation des elektronischen Modul-Steuergeräts mit dem zentralen elektronischen Steuergerät, einem weiteren Modul-Steuergerät eines weiteren Luftfederungs-Moduls oder mit einem weiteren elektronischen Steuergerät. Dieser Kommunikationsanschluss kann insbesondere als Datenbusanschluss ausgebildet sein, wenn beispielsweise die Kommunikation des elektronischen Modul-Steuergeräts mit dem zentralen elektronischen Steuergerät oder mit dem einem weiteren Modul-Steuergerät des weiteren Luftfederungs-Moduls oder mit dem weiteren elektronischen Steuergerät durch einen Datenbus stattfindet.
c) wenigstens einen elektrischen Energieversorgungsanschluss, durch welchen das elektropneumatische Luftfederungs-Modul mit elektrischer Energie versorgt wird.
d) wenigstens einen pneumatischen Druckluftversorgungsanschluss, durch welchen das elektropneumatische Luftfederungs-Modul mit Druckluft aus dem wenigstens einen Druckluftreservoir versorgt wird.
e) wenigstens einen pneumatischen Entlüftungsanschluss, durch welchen die Modul-Magnetventileinrichtung mit der Drucksenke verbunden ist. Dabei kann die Drucksenke insbesondere als Entlüftungsöffnung im Gehäuse des elektropneumatischen Luftfederungs-Moduls ausgebildet sein.
f) wenigstens einen pneumatischen Luftfederbalganschluss, an welchen der wenigstens eine Luftfederbalg angeschlossen ist.

Das Gehäuse des eine Baueinheit bildenden elektropneumatischen Luftfederungs-Moduls kann
a) mehrteilig oder einteilig ausgebildet sein, und/oder
b) an ein weiteres Gehäuse direkt oder indirekt angeflanscht sein, beispielsweise an ein Gehäuse eines weiteren elektropneumatischen Luftfederungs-Moduls.

Gemäß einer Weiterbildung kann in wenigstens ein elektropneumatisches Luftfederungs-Modul wenigstens ein Drucksensor integriert sein, welcher den an dem wenigstens einen pneumatischen Luftfederbalganschluss anstehenden Ist-Druck misst und ein diesen Ist-Druck repräsentierendes Ist-Drucksignal in das elektronische Modul-Steuergerät einsteuert, welches ausgebildet ist, dass es den Ist-Druck durch eine Ansteuerung der Modul-Magnetventileinrichtung an einen vorgegebenen Soll-Druck anpasst.

Mit anderen Worten sind dann in dem elektronischen Modul-Steuergerät des elektropneumatischen Luftfederungs-Moduls Druckregelroutinen integriert, durch welche der Ist-Niveau in wenigstens einem Luftfederbalg auf einen Soll-Druck einstellbar oder im Sinne eines Closed-Loop regelbar ist.

Insbesondere kann das elektropneumatische Luftfederungs-Modul ausgebildet sein als
a) 1-Kanal-Modul, welches in einem Kanal das Niveau wenigstens eines Abschnitts des Chassis regelt, oder als
b) 2-Kanal-Modul, welches in zwei Kanälen das Niveau von wenigstens zwei Abschnitten des Chassis regelt, oder als
c) 3-Kanal-Modul, welches in drei Kanälen das Niveau von wenigstens drei Abschnitten des Chassis regelt, oder als
d) 4-Kanal-Modul, welches in vier Kanälen das Niveau von wenigstens vier Abschnitten des Chassis regelt, oder als
e) Kneeling-Modul, welches das Niveau von auf verschiedenen Seiten des Fahrzeugs angeordneten Abschnitten des Chassis regelt.

Unter einem Kanal soll verstanden werden, dass innerhalb des betreffenden Kanals das Niveau auf dasselbe Soll-Niveau im Sinne eines Closed-Loops geregelt wird, unabhängig von der Anzahl der Abschnitte des Chassis, deren Niveau innerhalb dieses einen Kanals geregelt wird.

Jeder Kanal eines elektropneumatischen Luftfederungs-Moduls umfasst dann wenigstens einen Niveausensor, wenigstens einen Luftfederbalg sowie eine in dem elektronischen Modul-Steuergerät implementierte Regelroutine, welche das von dem wenigstens einen Niveausensor erfasste Ist-Niveau eines Abschnitts des Chassis oder mehrerer Abschnitte des Chassis an das für diesen Kanal vorgegebene Soll-Niveau durch Be- oder Entlüften des wenigstens einen Luftfederbalgs des betreffenden Kanals anpasst.

Beispielsweise können mit einem einzigen Kanal eines elektropneumatischen Luftfederungs-Moduls das Niveau eines Abschnitts des Chassis beispielsweise im Bereich eines Rades oder auch das Niveau zweier Abschnitte des Chassis geregelt werden, wobei sich die beiden Abschnitte beispielsweise im Bereich zweiter Räder einer Achse befinden. Alternativ hierzu könnte aber auch mit einem einzigen Kanal eines elektropneumatischen Luftfederungs-Moduls das Niveau von mehreren Abschnitten des Chassis beispielsweise im Bereich von Rädern einer Fahrzeugseite des Chassis geregelt werden, um beispielsweise eine Kneeling-Funktion zu realisieren, im Rahmen welcher das Niveau lediglich einer Fahrzeugseite beim Anfahren einer Haltestelle auf ein voreingestelltes Soll-Niveau geregelt wird.

Denkbar ist auch, dass mit einem einzigen Kanal eines elektropneumatischen Luftfederungs-Moduls das Niveau von mehr als zwei Abschnitten des Chassis geregelt wird. In allen diesen Fällen ist dann das Soll-Niveau für alle von dem einzigen Kanal geregelten Abschnitte gleich.

Bei einem 2-Kanal-Modul, welches in zwei Kanälen das Niveau von wenigstens zwei Abschnitten des Chassis unabhängig regelt, können demgegenüber zwei unterschiedliche Soll-Niveaus für zwei oder mehr Abschnitte des Chassis geregelt werden.

Analoges gilt für Module mit mehr als zwei Kanälen, beispielsweise mit 2+n-Kanälen, wobei dann 2+n-Soll-Niveaus unabhängig voneinander für mehrere Abschnitte des Chassis geregelt werden.

Wesentlich ist, dass die Niveauregelung in jedem Kanal unabhängig von der Regelung des Niveaus in einem weiteren Kanal ist. Dabei ist aber unbeachtlich, wie viele Luftfederbälge von einem einzigen Kanal eines elektropneumatischen Luftfederungs-Moduls umfasst sind bzw. zu diesem Kanal gehören. Denn je Kanal ist jeweils nur ein einziges Niveau durch Be- oder Entlüften wenigstens eines Luftfederbalgs regelbar.

Beispielsweise kann der wenigstens eine Abschnitt des Chassis im Bereich eines durch das Fahrwerk geführten Rades oder im Bereich einer Achse des Fahrwerks angeordnet sein. Mithin kann der wenigstens eine Abschnitt des Chassis in einem Bereich angeordnet sein, in welchem auch wenigstens ein Luftfederbalg und/oder wenigstens ein Niveausensor angeordnet ist.

Gemäß einer Weiterbildung kann das zentrale elektronische Steuergerät auch durch ein elektronisches Modul-Steuergerät eines elektropneumatischen Luftfederungs-Modul gebildet werden. Mit anderen Worten sind dann beispielsweise wenigstens zwei elektropneumatische Luftfederungs-Module vorgesehen, wobei dann das elektronische Modul-Steuergerät eines der wenigstens zwei elektropneumatischen Luftfederungs-Module zum einen das zentrale elektronische Steuergerät darstellt bzw. dessen Funktionen ausführt und zum andern zusätzlich aber noch die Funktionen der Niveauregelung für die an dieses Luftfederungs-Modul angeschlossenen Luftfederbälge ausführt. Insofern übt dann das betreffende elektronische Modul-Steuergerät eine Doppelfunktion aus, indem es einerseits als Master-Steuergerät das Soll-Niveau vorgibt, aber andererseits als Slave-Steuergerät das vorgegebene Soll-Niveau für den jeweils angeschlossenen wenigstens einen Luftfederbalg im Sinne einer Niveauregelung umsetzt.

Bevorzugt kann das zentrale elektronische Steuergerät das das Soll-Niveau des wenigstens einen Abschnitts des Chassis charakterisierende Soll-Niveausignal auf der Basis eines Werts erzeugen, welcher von einer insbesondere externen und separaten Bedieneinheit, einer Mensch-Maschine-Schnittstelle oder von einem Speicher des zentralen elektronischen Steuergeräts stammt. Die beispielsweise durch einen menschlichen Bediener bedienbare Bedieneinheit oder Mensch-Maschine-Schnittstelle kann den Wert beispielsweise drahtgebunden oder drahtlos in das zentrale elektronische Steuergerät einsteuern. Insbesondere kann die Bedieneinheit oder Mensch-Maschine-Schnittstelle an den Fahrzeugdatenbus oder an den separaten Luftfederungs-Datenbus der Luftfederungseinrichtung angeschlossen sein. Damit lässt sich beispielsweise mittels der externen Bedieneinheit für ein Be- und Entladen des Nutzfahrzeugs an Rampen oder zum Aufsatteln eines Sattelaufliegers ein gewünschtes Ladeniveau oder Aufsattelniveau als Soll-Niveau einstellen. Der Wert kann auch als Vorgabewert für das Soll-Niveau beispielsweise als Normal-Niveau in einem Speicher des zentralen elektronischen Steuergeräts gespeichert sein und dann bedarfsweise durch die Bedieneinheit oder Mensch-Maschine-Schnittstelle verändert werden.

Insbesondere kann daher die externe Bedieneinheit mit dem zentralen elektronischen Steuergerät derart zusammenwirken, dass bei erfassten Fahrzeuggeschwindigkeiten unterhalb einer vorgegebenen Geschwindigkeitsschwelle das Soll-Niveau des wenigstens einen Abschnitts des Chassis mittels der externen Bedieneinheit veränderbar ist.

Wesentlich ist, dass das zentrale elektronische Steuergerät insbesondere in Bezug auf eine Elektronik oder Steuerelektronik der Bedieneinheit oder der Mensch-Maschine-Schnittstelle ein separates Steuergerät mit eigener Funktionalität darstellt. Auch kann das Master-Steuergerät ausgebildet sein, dass es mit wenigstens einem weiteren elektronischen Steuergerät des Fahrzeugs, welches eine von der Luftfederung und Niveauregelung abweichende Funktion ausführt, beispielsweise über einen Fahrzeugdatenbus kommunizieren kann.

Insbesondere kann die Modul-Magnetventileinrichtung wenigstens ein elektromagnetisches Ventil umfassen wie beispielsweise wenigstens ein 2/2-Wege-Magnetventil, wenigstens ein 3/2-Wege-Magnetventil oder generell wenigstens ein Mehrwege-Magnetventil.

Die Erfindung um fasst auch ein Fahrzeug mit einer oben beschriebenen Chassis-Luftfederungseinrichtung.

### Zeichnung

Nachstehend sind Ausführungsbeispiele der Erfindung in der Zeichnung dargestellt und in der nachfolgenden Beschreibung näher erläutert. In der Zeichnung zeigt
- Fig.1: eine schematische Ansicht eines Aufbaus einer Luftfederungseinrichtung mit Niveauregelung gemäß einer bevorzugten Ausführungsform der Erfindung;
- Fig.2: einen schematischen Aufbau einer Ausführungsform eines elektropneumatischen 2-Kanal-Luftfederungs-Moduls der Luftfederungseinrichtung von Fig.1;
- Fig.3: einen schematischen Aufbau einer weiteren Ausführungsform eines elektropneumatischen 2-Kanal-Luftfederungs-Moduls der Luftfederungseinrichtung von Fig.1;
- Fig.4: einen schematischen Aufbau einer weiteren Ausführungsform eines elektropneumatischen 2-Kanal-Luftfederungs-Moduls der Luftfederungseinrichtung von Fig.1.

### Beschreibung der Ausführungsbeispiele

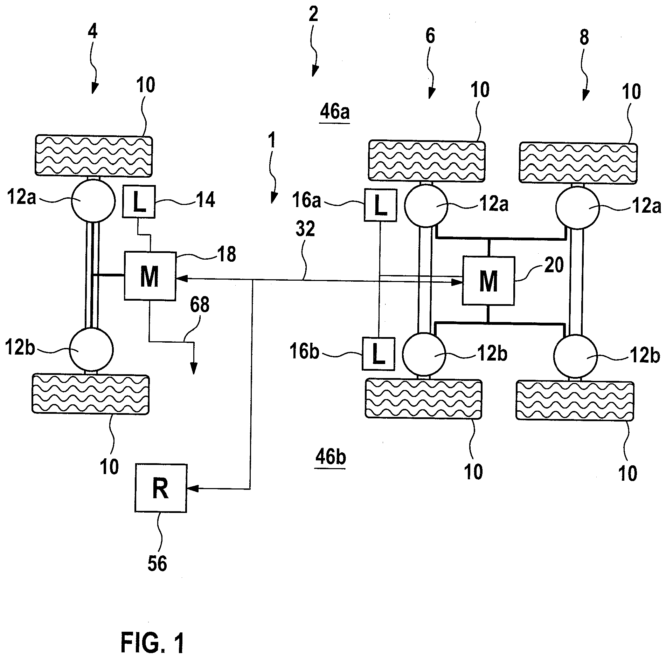

In **Fig. 1** stellt eine schematische Ansicht eines Aufbaus einer Chassis-Luftfederungseinrichtung 1 mit Niveauregelung eines Nutzfahrzeugs 2 gemäß einer bevorzugten Ausführungsform der Erfindung dar. Das Nutzfahrzeug 2 ist hier beispielsweise eine Zugmaschine einer Zugfahrzeug-Anhänger-Kombination mit einer Vorderachse 4 und zwei Hinterachsen, einer ersten Hinterachse 6 und einer zweiten Hinterachse 8.

Die Chassis-Luftfederungseinrichtung 1 weist beispielsweise an jedem Ende der Vorderachse 4 und der beiden Hinterachsen 6, 8 jeweils im Bereich eines Rades 10 je einen Luftfederbalg 12a, 12b auf, welcher zwischen einem Fahrwerk und einem Chassis des Zugfahrzeugs 2 angeordnet ist. Je nach Volumen und Druck von der in dem jeweiligen Luftfederbalg 12 a, 12b eingeschlossenen Lust stellt sich dann lokal, d.h. an dem Abschnitt des Chassis, an welchem der betreffende Luftfederbalg 12a, 12b angeordnet ist, ein bestimmtes Ist-Niveau dieses Abschnitts des Chassis in Bezug zum Fahrwerk oder in Bezug zur Fahrbahn ein.

Die Chassis-Luftfederungseinrichtung 1 weist beispielsweise weiterhin einen Vorderachs-Niveausensor 14 auf, welcher das Ist-Niveau des Chassis im Bereich der Vorderachse 4 misst und ein dieses dortige Ist-Niveau charakterisierendes Ist-Niveausignal erzeugt. Weiterhin sind von der Luftfederungseinrichtung 1 auch zwei Hinterachs-Niveausensoren 16a, 16b umfasst, von welchen ein in Fahrtrichtung gesehen rechter Hinterachs-Niveausensor 16a das Ist-Niveau des Chassis im Bereich des rechten Rades 10 der ersten Hinterachse 6 und von welchen ein in Fahrtrichtung gesehen linker Hinterachs-Niveausensor 16b das Ist-Niveau des Chassis im Bereich des linken Rades 10 der ersten Hinterachse 6 misst und jeweils ein jeweilige Ist-Niveau charakterisierendes Ist-Niveausignal erzeugt.

Die Chassis-Luftfederungseinrichtung 1 ist modular aufgebaut und beinhaltet als Module hier beispielsweise ein elektropneumatisches Vorderachs-Luftfederungs-Modul 18 und ein elektropneumatisches Hinterachs-Luftfederungs-Modul 20, jeweils als eine separate Baueinheit mit eigenem Gehäuse ausgeführt.

Der Übersichtlichkeit halber sind in **Fig. 1** die Luftfederungs-Module 18, 20 auch mit M, die Niveausensoren auch mit L und eine externe Bedieneinheit 56 auch mit R bezeichnet.

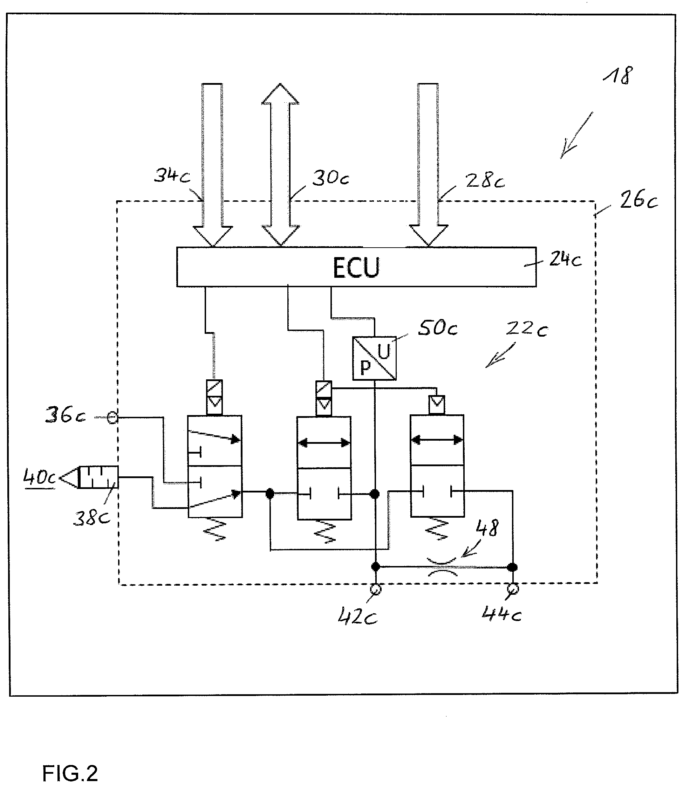

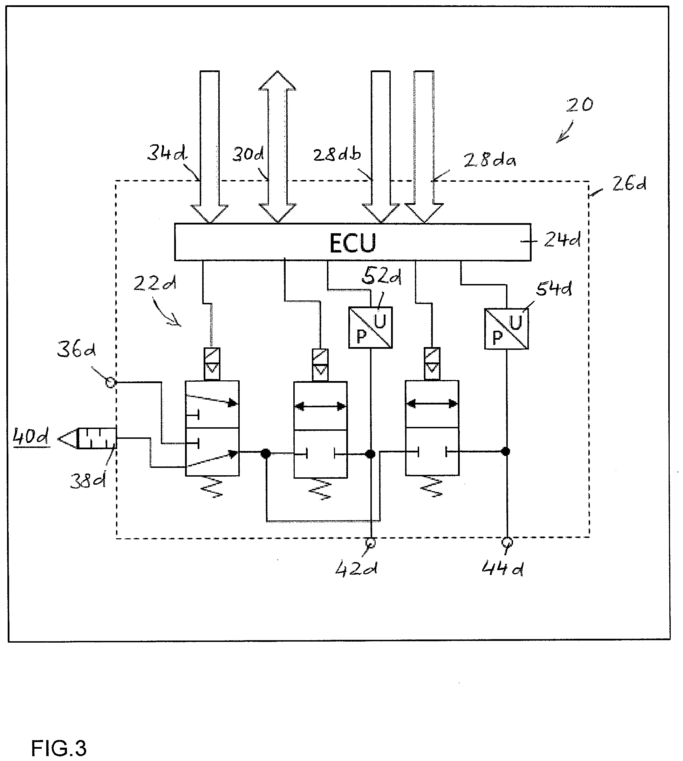

In **Fig. 2** und **Fig. 3** sind exemplarisch Beispiele für solche elektropneumatischen Luftfederungs-Module 18, 20 dargestellt, welche jeweils eine integrierte Modul-Magnetventileinrichtung 22c, 22d und ein die Modul-Magnetventileinrichtung 22c, 22d steuerndes integriertes elektronisches Modul-Steuergerät 24c, 24d jeweils innerhalb eines dort durch eine strichpunktierte Linie symbolisierten Gehäuses 26c, 26d aufweisen.

In **Fig.2** ist das Vorderachs-Luftfederungs-Modul 18 als beispielsweise 1-Kanal-Luftfederungs-Modul dargestellt. Das Vorderachs-Luftfederungs-Modul 18 weist einen elektrischen Signaleingangsanschluss 28c zum Einsteuern der Ist-Niveausignale des an der Vorderachse 4 angeordneten Niveausensors 14 auf, weiterhin einen Kommunikationsanschluss 30c für die Kommunikation des elektronischen Modul-Steuergeräts 24c des Vorderachs-Luftfederungs-Moduls 18 mit dem elektronischen Modul-Steuergerät 24d des elektropneumatischen Hinterachs-Luftfederungs-Moduls 20. Dieser Kommunikationsanschluss 30c ist insbesondere als Datenbusanschluss ausgebildet, wenn beispielsweise die Kommunikation des elektronischen Modul-Steuergeräts 24c des Vorderachs-Luftfederungs-Moduls 18 mit dem elektronischen Modul-Steuergerät 24d des Hinterachs-Luftfederungs-Moduls 20 wie hier beispielsweise durch einen eigenen oder separaten Luftfederungs-Datenbus 32 stattfindet. Weiterhin sind ein elektrischer Energieversorgungsanschluss 34c vorhanden, durch welchen das elektropneumatische Vorderachs-Modul 18 mit elektrischer Energie versorgt wird wie auch ein pneumatischer Druckluftversorgungsanschluss 36c, durch welchen das elektropneumatische Vorderachs-Luftfederungs-Modul 18 mit Druckluft aus einem hier nicht dargestellten Druckluftreservoir versorgt wird. Darüber hinaus ist auch ein pneumatischer Entlüftungsanschluss 38c vorgesehen, durch welchen die Modul-Magnetventileinrichtung 22c mit einer Drucksenke 40c verbunden ist. Dabei ist die Drucksenke 40c insbesondere als Entlüftungsöffnung im Gehäuse 26c des elektropneumatischen Vorderachs-Luftfederungs-Moduls 18 ausgebildet. Schließlich sind noch zwei pneumatische Luftfederbalganschlüsse 42c vorhanden, an welche jeweils einer der beiden Luftfederbälge 12a, 12b an der Vorderachse 4 angeschlossen ist. Die genannten Anschlüsse sind alle in dem Gehäuse 26c des Vorderachs-Luftfederungs-Moduls 18 ausgebildet.

Wie **Fig. 1** zeigt, ist der Kommunikationsanschluss 30c des elektronischen Modul-Steuergeräts 24c des Vorderachs-Luftfederungs-Moduls 18 bevorzugt an einen Fahrzeugdatenbus 68 angeschlossen, an welchen wenigstens ein weiteres, für von der Luftfederung und Niveauregelung abweichende Funktionen vorgesehenes elektronisches Steuergerät angeschlossen ist, beispielsweise ein Bremssteuergerät und/oder ein Steuergerät für die Antriebsmaschine.

Das Vorderachs-Luftfederungs-Modul 18 ist bevorzugt im Bereich der Vorderachse 4 des Zugfahrzeugs 2 angeordnet. Es ist dabei klar, dass zwischen den beiden pneumatischen Luftfederbalganschlüssen 42 c und den Luftfederbälgen 12a, 12b an der Vorderachse 4 pneumatische Leitungen gezogen sind. Ebenso ist zwischen dem elektrischen Signalanschluss 28c und dem an der Vorderachse 4 angeordneten Niveausensor 14 eine Signalleitung gezogen.

Wie **Fig. 2** zeigt, beinhaltet das Vorderachs-Luftfederungs-Modul 18 als Modul-Magnetventileinrichtung 22c beispielsweise ein 3/2-Wege-Magnetventil sowie zwei 2/2-Wege-Magnetventile, durch welche die beiden pneumatischen Luftfederbalganschlüsse 42c, 44c theoretisch separat be- und entlüftet werden können, wobei eine Belüftung durch eine Verbindung des betreffenden pneumatischen Luftfederbalganschlusses 42c, 44c mit dem Druckluftversorgungsanschluss 36c und damit mit dem Druckluftvorrat und eine Entlüftung eine Verbindung des betreffenden pneumatischen Luftfederbalganschlusses 42c, 44c mit dem Entlüftungsanschluss 38c zustande kommt. Dabei wird die Modul-Magnetventileinrichtung 22c jeweils von dem elektronischen Modul-Steuergerät 24c des Vorderachs-Luftfederungs-Moduls 18 entsprechend gesteuert, damit die jeweilige Verbindung zustande kommt. Damit wäre eigentlich eine Kreistrennung zwischen dem Luftfederbalg 12a auf der rechten Fahrzeugseite 46a und dem Luftfederbalg 12b auf der linken Fahrzeugseite 46b gegeben, d.h. beide Luftfederbälge 12a, 12b könnten getrennt und unabhängig voneinander be- oder entlüftet werden, wodurch ein Vorderachs-Luftfederungs-Modul 18 mit eigentlich 2 Kanälen realisiert wäre.

Jedoch sind hier beispielsweise die beiden pneumatischen Luftfederbalganschlüsse 44c, 44d durch eine interne Drosselverbindung 48 miteinander verbunden, so dass wenn auch zunächst unterschiedliche Drücke für die beiden Luftfederbälge 12a, 12b der rechten und linken Fahrzeugseite 46a, 46b eingestellt werden, nach einiger Zeit ein Druckausgleich stattfindet. Folglich liegt hier wie oben bereits erwähnt tatsächlich ein Vorderachs-Luftfederungs-Modul 18 mit lediglich einem Kanal vor.

Zudem steht einer der beiden pneumatischen Luftfederbalganschlüsse 42c mit einem Drucksensor 50 in Verbindung, welcher dann den sich an den beiden pneumatischen Luftfederbalganschlüsse 42c, 44c nach einiger Zeit einstellenden gemeinsamen Druckwert des an die beiden Luftfederbälge 12a, 12b an der Vorderachse 4 ausgesteuerten Drucks misst und einen entsprechenden Ist-Druckwert in das elektronische Modul-Steuergerät 24c des Vorderachs-Luftfederungs-Moduls 18 einsteuert.

Das beispielsweise in **Fig. 3** dargestellte Hinterachs-Luftfederungs-Modul 20 ist grundlegend aufgebaut wie das Vorderachsmodul-Luftfederungs-Modul 18 mit dem Unterschied, dass es sich hier tatsächlich um ein 2-Kanal-Modul handelt, bei welchem die Luftfederbälge 12a beispielsweise der rechten Fahrzeugseite 46a und die Luftfederbälge 12b der linken Fahrzeugseite 46b im Bereich der beiden Hinterachsen 6, 8 unabhängig voneinander be- und entlüftet werden können.

Das Hinterachs-Luftfederungs-Modul 20 weist demzufolge zwei elektrische Signalanschlüsse 28da, 28db zum Einsteuern der Ist-Niveausignale der an der ersten Hinterachse 6 angeordneten Niveausensoren 16a, 16b an der rechten und linken Fahrzeugseite 46a, 46b auf, weiterhin einen Kommunikationsanschluss 30d für die Kommunikation des elektronischen Modul-Steuergeräts 24d des Hinterachs-Luftfederungs-Moduls 20 mit dem elektronischen Modul-Steuergerät 24c des elektropneumatischen Vorderachs-Luftfederungs-Moduls 18. Dieser Kommunikationsanschluss 30d ist insbesondere ebenfalls als Datenbusanschluss ausgebildet und an den Luftfederungs-Datenbus 32 angeschlossen.

Weiterhin sind ein elektrischer Energieversorgungsanschluss 34d vorhanden, durch welchen das elektropneumatische Hinterachs-Luftfederungs-Modul 20 mit elektrischer Energie versorgt wird wie auch ein pneumatischer Druckluftversorgungsanschluss 36d, durch welchen das elektropneumatische Hinterachs-Luftfederungs-Modul 20 mit Druckluft aus einem hier nicht dargestellten Druckluftreservoir versorgt wird. Darüber hinaus ist auch hier ein pneumatischer Entlüftungsanschluss 38d vorgesehen, durch welchen die Modul-Magnetventileinrichtung 22d des Hinterachs-Luftfederungs-Moduls 20 mit einer Drucksenke 40d verbunden ist, welche hier ebenfalls als Entlüftungsöffnung im Gehäuse 26d des elektropneumatischen Hinterachs-Luftfederungs-Moduls 20 ausgebildet ist. Schließlich sind noch zwei pneumatische Luftfederbalganschlüsse 42d, 44d vorhanden, an welche jeweils zwei Luftfederbälge 12a, 12b an beiden Hinterachsen 6, 8 jeweils einer Fahrzeugseite 46a, 46b angeschlossen sind. Die genannten Anschlüsse sind alle an oder in dem Gehäuse 26d des Hinterachs-Luftfederungs-Moduls 20 ausgebildet.

Zudem stehen beide pneumatischen Luftfederbalganschlüsse 42d, 44d mit jeweils einem Drucksensor 52d, 54d in Verbindung, welche dann die sich an den beiden pneumatischen Luftfederbalganschlüssen 42d, 44d einstellenden Druckwerte der an die Luftfederbälge 12a, 12b der beiden Fahrzeugseiten 46a, 46b ausgesteuerten Drücke messen und entsprechende Ist-Druckwerte in das elektronische Modul-Steuergerät 24d einsteuern.

Das Hinterachs-Luftfederungs-Modul 20 ist bevorzugt in Längsrichtung des Zugfahrzeugs 2 gesehen zwischen den beiden Hinterachsen 6, 8 des Zugfahrzeugs 2 angeordnet. Es ist dabei auch klar, dass zwischen den beiden pneumatischen Luftfederbalganschlüssen 42d, 44d und den Luftfederbälgen 12a, 12b jeweils pneumatische Leitungen gezogen sind. Ebenso ist zwischen den elektrischen Signalanschlüssen 28da, 28db und den an der ersten Hinterachse 6 angeordneten Niveausensoren 16a, 16b jeweils eine Signalleitung gezogen.

Wie **Fig. 3** zeigt, beinhaltet das Hinterachs-Luftfederungs-Modul 20 als Modul-Magnetventileinrichtung 22d beispielsweise ebenfalls ein 3/2-Wege-Magnetventil sowie zwei 2/2-Wege-Magnetventile, durch welche die beiden pneumatischen Luftfederbalganschlüsse 42d, 44d tatsächlich separat be- und entlüftet werden können, wobei eine Belüftung durch eine Verbindung des betreffenden pneumatischen Luftfederbalganschlusses 42d, 44d mit dem Druckluftversorgungsanschluss 36d und damit mit dem Druckluftvorrat und eine Entlüftung eine Verbindung des betreffenden pneumatischen Luftfederbalganschlusses 42d, 44d mit dem Entlüftungsanschluss 38d zustande kommt. Dabei wird die Modul-Magnetventileinrichtung 22d jeweils von dem elektronischen Modul-Steuergerät 24d des Hinterachs-Luftfederungs-Moduls 20 entsprechend gesteuert, damit die jeweilige Verbindung zustande kommt.

Bevorzugt stellt beispielsweise das elektronische Modul-Steuergerät 24c des Vorderachs-Luftfederungs-Moduls 18 ein zentrales elektronisches Steuergerät der Luftfederungseinrichtung 1 dar, in dessen Speicher ein Soll-Niveau für das Chassis beispielsweise als Normal-Niveau während der Fahrt des Zugfahrzeugs 2 gespeichert ist. In diesem Sinne stellt das elektronische Modul-Steuergerät 24c des Vorderachs-Luftfederungs-Moduls 18 ein Master-Steuergerät dar, welches das Soll-Niveau vorgibt, welches wenigstens zeitweise beispielsweise für das gesamte Chassis gilt und nicht nur für den Abschnitt des Chassis im Bereich der Vorderachse 4.

Zum andern stellt das elektronische Modul-Steuergerät 24c des Vorderachs-Luftfederungs-Moduls 18 aber auch ein Slave-Steuergerät dar, welches für den Abschnitt des Chassis an der Vorderachse 4 das vom Master-Steuergerät, hier also das durch sich selbst vorgegebene Soll-Niveau einstellen oder einregeln muss. Die Master-Eigenschaft des Master-Steuergeräts 24c besteht hier also darin, dass durch das Master-Steuergerät 24c das Soll-Niveau hier beispielsweise für das gesamte Chassis vorgegeben wird, welches dann das jeweilige Slave-Steuergerät 24c, 24d lokal in dem jeweiligen elektropneumatischen Luftfederungs-Modul 18, 20 umsetzen muss.

Dann findet eine (lokale) Niveauregelung innerhalb des Vorderachs-Luftfederungs-Moduls 18 für die Vorderachse 4 statt, indem über den elektrischen Signalanschluss 28c die Ist-Niveausignale des an der Vorderachse 4 angeordneten Niveausensors 14 in das Modul-Steuergerät 24c des Vorderachs-Luftfederungs-Moduls 18 eingesteuert werden und dann das Modul-Steuergerät 18 des Vorderachs-Luftfederungs-Moduls 18 infolge von implementierten Niveauregelungsroutinen die Modul-Magnetventileinrichtung 22c des Vorderachs-Luftfederungs-Moduls 18 ansteuert, um durch Be- oder Entlüften der beiden Luftfederbälge 16a, 16b an der Vorderachse 4 das dortige Ist-Niveau des Chassis auf das vorgegebene Soll-Niveau einzuregeln.

Weiterhin kann auch eine Druckregelung des durch den Drucksensor 50c erfassten Ist-Drucks in den angeschlossenen Luftfederbälgen 42c, 44c auf einen vorgegebenen Soll-Druck stattfinden, wobei der Wert für den Solldruck beispielsweise ebenfalls in einem Speicher des Modul-Steuergeräts 24c des Vorderachs-Luftfederungs-Moduls 18 abgespeichert ist.

Zusätzlich wird bevorzugt über den separaten Luftfederungs-Datenbus 32 der Wert für das Soll-Niveau des Chassis beispielsweise während der Fahrt vom Modul-Steuergerät 24c des Vorderachs-Luftfederungs-Moduls 18 in seiner Funktion als Master-Steuergerät an das Modul-Steuergerät 24d des Hinterachs-Luftfederungs-Moduls 20 übertragen, welches das Soll-Niveau wiederum durch die dort lokal implementierten Niveau-Regelroutinen dann umsetzen muss, indem das Modul-Steuergerät 24d des Hinterachs-Luftfederungs-Moduls 20 dann infolge einer Steuerung der Modul-Magnetventileinrichtung 22d des Hinterachs-Luftfederungs-Moduls 20 in beiden Kanälen, d. h. für die Luftfederbälge 16a, 16b auf beiden Fahrzeugseiten 46a, 46b das Soll-Niveau des Chassis auch im Bereich der beiden Hinterachsen 6, 8 auf der Basis der über die Signalanschlüsse 28da, 28db eingesteuerten Werte für das Ist-Niveau einregelt.

Weiterhin kann auch durch das Modul-Steuergerät 24d des Hinterachs-Luftfederungs-Moduls 20 eine Druckregelung der durch die beiden Drucksensoren 50c, 52c erfassten Ist-Drücke in den angeschlossenen Luftfederbälgen 16a, 16b an den beiden Hinterachsen 6, 8 auf einen vorgegebenen Soll-Druck stattfinden, wobei der Wert für den Solldruck beispielsweise ebenfalls in einem Speicher des Modul-Steuergeräts 24c des Vorderachs-Luftfederungs-Moduls 18 abgespeichert ist und über den Luftfederungs-Datenbus 32 zum Modul-Steuergeräts 24d des Hinterachs-Luftfederungs-Moduls 20 übertragen wird.

Anstatt in eines der Modul-Steuergeräte 24c oder 24d integriert können die Funktionen des Master-Steuergeräts auch in einem zusätzlichen und separaten zentralen Steuergerät implementiert sein, welches beispielsweise keinen Bestandteil eines Luftfederungs-Moduls 18, 20 bildet und bezogen auf die Ausführungsform von Fig. 1 dann ein drittes elektronisches Steuergerät darstellt, welches dann ebenfalls an den Luftfederungs-Datenbus 32 angeschlossen ist. Auch können jeweils verschiedene Soll-Niveaus für die rechte Fahrzeugseite 46a und die linke Fahrzeugseite 46b hier beispielsweise durch das Vorderachs-Luftfederungs-Modul 18 vorgegeben werden, welche dann wegen der Drosselverbindung 48 durch das Vorderachs-Luftfederungs-Modul 18 lediglich für eine bestimmte Zeit und durch das Hinterachs-Luftfederungs-Modul 20 eingeregelt werden. Selbstverständlich könnte auch das Modul-Steuergerät 24d des Hinterachs-Luftfederungs-Moduls 20 das Master-Steuergerät und das Modul-Steuergerät 24c des Vorderachs-Luftfederungs-Moduls 20 das Slave-Steuergerät darstellen.

Wie aus **Fig. 1** hervorgeht, ist an den Luftfederungs-Datenbus 32 auch eine externe Bedieneinheit 56 beispielsweise über eine Signalleitung angeschlossen, durch welche ein Soll-Niveau für das Chassis vorgegeben werden kann, wie es beispielsweise zum Aufsatteln eines Sattelaufliegers benötigt wird, damit beim Unterfahren des Sattelaufliegers durch das Zugfahrzeug 2 ein gewünschter Luftspalt zwischen Sattelplatte und Aufgleitplatte besteht. Die externe Bedieneinheit 56 kann insbesondere von Hand durch den Fahrer des Zugfahrzeugs 2 bedient werden, wobei der Fahrer das gewünschte Soll-Niveau in die externe Bedieneinheit 56 eingibt. Anstatt über eine Signalleitung könnte die Bedieneinheit 56 auch drahtlos mit einer an den Luftfederungs-Datenbus 32 angeschlossene Empfangseinheit kommunizieren, um das vorgegebene Soll-Niveau auf den Luftfederungs-Datenbus 32 zu übertragen.

Dieses dann von der externen Bedieneinheit 56 vorgegebene und auf den Luftfederungs-Datenbus 32 übertragene Soll-Niveau wird vom Modul-Steuergerät 24c des Vorderachs-Luftfederungs-Moduls 18 gelesen und dann einerseits lokal, d.h. für die angeschlossenen Luftfederbälge 12a, 12b an der Vorderachse 4 umgesetzt. Andererseits "befiehlt" das Modul-Steuergerät 24c des Vorderachs-Luftfederungs-Moduls 18 als Master-Steuergerät dem Modul-Steuergerät 24d des Hinterachs-Luftfederungs-Moduls 20 das von der externen Bedieneinheit 56 vorgegebene Soll-Niveau dort lokal, d.h. an den Luftfederbälgen 16a, 16b an den beiden Hinterachsen 6, 8 einzuregeln.

Alternativ könnten der Hinterachs-Luftfederungs-Modul 20 und der Vorderachs-Luftfederungs-Modul 18 auch an einen Fahrzeugdatenbus angeschlossen sein, an welchen noch weitere elektronische Steuergeräte des Fahrzeugs angeschlossen sind, welche von den Luftfederungsfunktionen abweichende Funktionen ausführen.

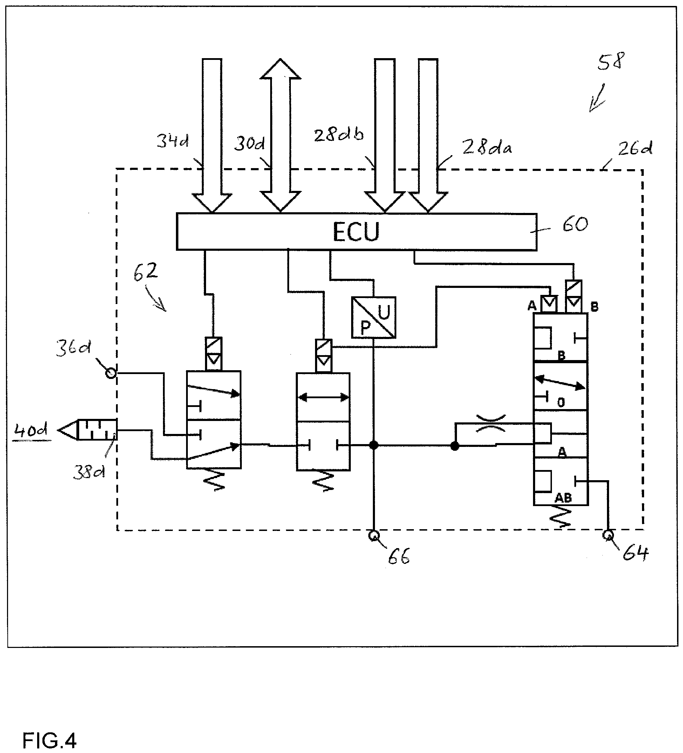

**Fig. 4** zeigt einen Kneeling-Luftfederungs-Modul 58, mit welchem eine Fahrzeugseite, insbesondere die rechte Fahrzeugseite 46a auf ein von einem Kneeling-Signalgeber erzeugtes Kneeling-Signal auf ein vorbestimmtes Kneeling-Niveau abgesenkt werden kann, während die linke Fahrzeugseite 46b auf dem während der Fahrt herrschenden Normal-Niveau verbleibt. Ein solches Kneeling-Luftfederungs-Modul 58 wird bevorzugt für Linienbusse eingesetzt, um an Haltestellen an der rechten Fahrzeugseite 46a das Kneeling-Niveau einzustellen. Dabei stellt das Modul-Steuergerät 58 des Kneeling-Luftfederungs-Modul 58 beispielsweise ein Slave-Steuergerät dar, welches das Kneeling-Niveau als Soll-Niveau von einem zentralen elektronischen Steuergerät als Master-Steuergerät empfängt.

Die Anschlüsse des Kneeling-Luftfederungs-Moduls 58, welches ebenfalls ein 2-Kanal-Modul darstellt (1 Kanal für die rechte Fahrzeugseite 46a, 1 Kanal für die linke Fahrzeugseite 46b) entsprechen den Anschlüssen des Hinterachs-Luftfederungs-Moduls 20 von **Fig. 3**. Als Modul-Magnetventileinrichtung 62 werden hier beispielsweise ein 3/2-Wege-Magnetventil, ein 2/2-Wege-Magnetventil sowie ein 3/4-Wege-Magnetventil eingesetzt, um die beiden pneumatischen Luftfederbalganschlüsse 64, 66 für die rechte Fahrzeugseite 46a und die für die linke Fahrzeugseite 46b separat be- und entlüften zu können.

Luftfederungs-Module 18, 20, 58 können generell eine beliebige Anzahl von Kanälen aufweisen, insbesondere bis zu 4 Kanäle, wobei in einem Kanal stets das Niveau eines Abschnitts des Chassis oder des gesamten Chassis durch eine Be- oder Entlüftung wenigstens eines Luftfederbalgs auf der Basis von Signalen wenigstens eines das Ist-Niveau erfassenden Niveausensors auf ein vorgegebenes Soll-Niveau eingeregelt wird. Dieses Soll-Niveau kann das Soll-Niveau an einem beliebigen Abschnitt des Chassis wie an einem Rad, an einer Achse, an mehreren Achsen, an einer Fahrzeugseite oder an beiden Fahrzeugseiten des Nutzfahrzeugs 2 sein. Die Luftfederungs-Module 18, 20, 58 sind dann jeweils derart ausgebildet, dass sie das vorgegebene Soll-Niveau an den oben erwähnten Abschnitten individuell einregeln können.

### Bezugszeichenliste

- 1: Luftfederungseinrichtung
- 2: Nutzfahrzeug
- 4: Vorderachse
- 6: erste Hinterachse
- 8: zweite Hinterachse
- 10: Rad
- 12a/b: Luftfederbälge
- 14: Vorderachs-Niveausensor
- 16a/b: Hinterachs-Niveausensoren
- 18: Vorderachs-Luftfderungsmodul
- 20: Hinterachs-Luftfederungs-Modul
- 22c/d: Modul-Magnetventileinrichtung
- 24c/d: Modul-Steuergerät
- 26c/d: Gehäuse
- 28c/da/db: Signalanschlüsse
- 30: Kommunikationsanschluss
- 32: Luftfederungs-Datenbus
- 34c/d: Energieversorgungsanschlüsse
- 36c/d: Druckluftversorgungsanschlüsse
- 38c/d: Entlüftungsanschlüsse
- 40c/d: Drucksenken
- 42c/d: Luftfederbalganschlüsse
- 44c/d: Luftfederbalganschlüsse
- 46a/b: Fahrzeugseite
- 48: Drosselverbindung
- 50c: Drucksensor
- 52d: Drucksensor
- 54d: Drucksensor
- 56: externe Bedieneinheit
- 58: Kneeling-Modul
- 60: Modul-Steuergerät
- 62: Modul-Magnetventileinrichtung
- 64: Luftfederbalganschluss rechts
- 66: Luftfederbalganschluss links
- 68: Fahrzeugdatenbus
- M: Luftfederungs-Modul
- R: externe Bedieneinheit
- L: Niveausensor

## Patentansprüche

1. Chassis-Luftfederungseinrichtung (1) zur Abstützung eines Chassis eines Nutzfahrzeugs (2) an einem Fahrwerk einschließlich Niveauregelung, welche wenigstens Folgendes beinhaltet:
a) wenigstens ein zentrales elektronisches Steuergerät (24c), welches wenigstens ein ein Soll-Niveau für wenigstens einen Abschnitt des Chassis charakterisierendes Soll-Niveausignal vorgibt,
b) wenigstens einen Niveausensor (14, 16a, 16b), welcher ein ein Ist-Niveau des wenigstens einen Abschnitts des Chassis charakterisierendes Ist-Niveausignal erzeugt,
c) wenigstens einen Luftfederbalg (12a, 12b), durch welchen der wenigstens eine Abschnitt des Chassis gegenüber dem Fahrwerk abgestützt ist,
d) wenigstens ein Druckluftreservoir, wobei
e) die Chassis-Luftfederungseinrichtung (1) modular aufgebaut ist und als Module wenigstens das zentrale elektronische Steuergerät (24c) und zusätzlich wenigstens ein als separate Baueinheit ausgeführtes elektropneumatisches Luftfederungs-Modul (18, 20) beinhaltet, wobei
f) das wenigstens eine elektropneumatische Luftfederungs-Modul (18, 20) mit einer integrierten Modul-Magnetventileinrichtung (22c, 22d) und mit einem in die Modul-Magnetventileinrichtung (22c, 22d) steuernden integrierten elektronischen Modul-Steuergerät (24c, 24d) versehen ist, wobei das elektronische Modul-Steuergerät (24c, 24d) das wenigstens eine Soll-Niveausignal und das wenigstens eine Ist-Niveausignal verarbeitet, und wobei
g) die Modul-Magnetventileinrichtung (22c, 22d) an den wenigstens einen Luftfederbalg (12a, 12b) sowie das das wenigstens eine Druckluftreservoir angeschlossen ist, und wobei
h) das elektronische Modul-Steuergerät (24c, 24d) ausgebildet ist, dass es die Modul-Magnetventileinrichtung (22c, 22d) abhängig von dem wenigstens einen Ist-Niveausignal und dem das wenigstens einen Soll-Niveausignal derart steuert, dass durch Belüften des wenigstens einen Luftfederbalgs (12a, 12b) mit Druckluft aus dem wenigstens einen Druckluftreservoir oder durch Entlüften des wenigstens einen Luftfederbalgs (12a, 12b) in eine Drucksenke (40c, 40d) das Ist-Niveau des wenigstens einen Abschnitts des Chassis an das Soll-Niveau angepasst wird, **dadurch gekennzeichnet, dass**
i) das zentrale elektronische Steuergerät (24c) und das elektronische Modul-Steuergerät (24c, 24d) des wenigstens einen elektropneumatischen Luftfederungsmoduls (18, 20) an einen eigenen, von wenigstens einem weiteren Datenbus unabhängigen Luftfederungs-Datenbus (32) angeschlossen sind und über lediglich über diesen eigenen Luftfederungs-Datenbus (32) miteinander kommunizieren, und dass
j) das zentrale elektronische Steuergerät (24c) ein Master-Steuergerät und in Bezug zu diesem das elektronische Modul-Steuergerät (24c, 24d) des wenigstens einen elektropneumatischen Luftfederungs-Moduls (20) ein Slave-Steuergerät darstellt, und wobei
k) die Niveauregelung lokal oder dezentral innerhalb des wenigstens einen elektropneumatischen Luftfederungs-Moduls (18, 20) stattfindet.

2. Chassis-Luftfederungseinrichtung nach Anspruch 1, **dadurch gekennzeichnet, dass** das elektropneumatische Luftfederungs-Modul (18, 20) ein eigenes, separates Gehäuse (26c, 26d) mit wenigstens folgenden Anschlüssen aufweist:
a) wenigstens einen elektrischen Signalanschluss (28c, 28da, 28db) zum Einsteuern des wenigstens einen Ist-Niveausignals,
b) wenigstens einen Kommunikationsanschluss (30c, 30d) für die Kommunikation des elektronischen Modul-Steuergeräts (24c, 24d) mit dem zentralen elektronischen Steuergerät, einem weiteren Modul-Steuergerät (24c, 24d) eines weiteren Luftfederungs-Moduls (18, 20) oder mit einem weiteren elektronischen Steuergerät,
c) wenigstens einen elektrischen Energieversorgungsanschluss (34c, 34d), durch welchen das elektropneumatische Luftfederungs-Modul (18, 20) mit elektrischer Energie versorgt wird,
d) wenigstens einen pneumatischen Druckluftversorgungsanschluss (36c, 36d), durch welchen das elektropneumatische Luftfederungs-Modul (18, 20) mit Druckluft aus dem wenigstens einen Druckluftreservoir versorgt wird,
e) wenigstens einen pneumatischen Entlüftungsanschluss (38c, 38d), durch welchen die Modul-Magnetventileinrichtung (22c, 22d) mit der Drucksenke (40c, 40d) verbunden ist,
f) wenigstens einen pneumatischen Luftfederbalganschluss (42 c, 42d, 44c, 44d), an welchen der wenigstens eine Luftfederbalg (12a, 12b) angeschlossen ist.

3. Chassis-Luftfederungseinrichtung nach Anspruch 2, **dadurch gekennzeichnet, dass** in das wenigstens eine elektropneumatische Luftfederungs-Modul (18, 20) wenigstens ein Drucksensor (50c, 52d, 54d) integriert ist, welcher den an dem wenigstens einen pneumatischen Luftfederbalganschluss (42c, 42d, 44c, 44d) anstehenden Ist-Druck misst und ein diesen Ist-Druck repräsentierendes Ist-Drucksignal in das elektronische Modul-Steuergerät (24c, 24d) einsteuert, welches ausgebildet ist, dass es den Ist-Druck durch eine Ansteuerung der Modul-Magnetventileinrichtung an einen vorgegebenen Soll-Druck anpasst.

4. Chassis-Luftfederungseinrichtung nach einem der vorhergehenden Ansprüche, **dadurch gekennzeichnet, dass** das elektropneumatische Luftfederungs-Modul (18, 20) ausgebildet ist als
a) 1-Kanal-Modul, welches in einem Kanal das Niveau wenigstens eines Abschnitts des Chassis regelt, oder als
b) 2-Kanal-Modul, welches in zwei Kanälen das Niveau von wenigstens zwei Abschnitten des Chassis regelt, oder als
c) 3-Kanal-Modul, welches in drei Kanälen das Niveau von wenigstens drei Abschnitten des Chassis regelt, oder als
d) 4-Kanal-Modul, welches in vier Kanälen das Niveau von wenigstens vier Abschnitten des Chassis regelt, oder als
e) Kneeling-Modul, welches das Niveau von auf verschiedenen Seiten des Fahrzeugs angeordneten Abschnitten des Chassis regelt.

5. Chassis-Luftfederungseinrichtung nach einem der vorhergehenden Ansprüche, **dadurch gekennzeichnet, dass** der wenigstens eine Abschnitt des Chassis im Bereich eines durch das Fahrwerk geführten Rades (10) oder im Bereich einer Achse (4, 6, 8) des Fahrwerks angeordnet ist.

6. Chassis-Luftfederungseinrichtung nach einem der vorhergehenden Ansprüche, **dadurch gekennzeichnet, dass** das zentrale elektronische Steuergerät (24c) durch ein elektronisches Modul-Steuergerät eines elektropneumatischen Luftfederungs-Moduls (18) gebildet wird.

7. Chassis-Luftfederungseinrichtung nach einem der vorhergehenden Ansprüche, **dadurch gekennzeichnet, dass** das zentrale elektronische Steuergerät (24c) das das Soll-Niveau des wenigstens einen Abschnitts des Chassis charakterisierende Soll-Niveausignal auf der Basis eines Werts erzeugt, welches von einer externen Bedieneinheit (56), einer Mensch-Maschine-Schnittstelle oder von in einem Speicher des zentralen elektronischen Steuergeräts stammt.

8. Chassis-Luftfederungseinrichtung nach Anspruch 7, **dadurch gekennzeichnet, dass** die externe Bedieneinheit (56) mit dem zentralen elektronischen Steuergerät (24c) derart zusammenwirkt, dass bei erfassten Fahrzeuggeschwindigkeiten unterhalb einer vorgegebenen Geschwindigkeitsschwelle das Soll-Niveau des wenigstens einen Abschnitts des Chassis mittels der externen Bedieneinheit (56) veränderbar ist.

9. Chassis-Luftfederungseinrichtung nach einem der vorhergehenden Ansprüche, **dadurch gekennzeichnet, dass** die Modul-Magnetventileinrichtung (22c, 22d) wenigstens ein elektromagnetisches Ventil umfasst.

10. Fahrzeug (2) mit einer Chassis-Luftfederungseinrichtung (1) nach einem der vorhergehenden Ansprüche.

## Claims

1. A chassis air-suspension device (1) for supporting a chassis of a utility vehicle (2) on the running gear including level regulation and comprising at least the following:
a) at least one central electronic control unit (24c) that predetermines at least one reference level signal characterising a reference level for at least one portion of the chassis;
b) at least one level sensor (14, 16a, 16b) that generates an actual level signal characterising an actual level of the last least one portion of the chassis;
c) at least one air bellows (12a, 12b) by means of which the at least one portion of the chassis is supported in relation to the running gear;
d) at least one compressed-air reservoir;
e) the chassis air-suspension device (1) being of modular design and, as a module, containing at least the central electronic control unit (24c) and, in addition, at least one electro-pneumatic air-suspension module (18, 20) configured as a separate unit;
f) the at least one electro-pneumatic air-suspension module (18, 20) being provided with an integrated module solenoid-valve device (22c, 22d) and an electronic module control unit (24c, 24d) that is integrated in the module solenoid-valve device (22c, 22d) with a control function, this module solenoid-valve device (22c, 22d) processing the at least one reference level signal and the at least one actual level signal, and
g) the integrated module solenoid-valve device (22c, 22d) being connected to the at least one air bellows (12a, 12b) and to the at least one compressed-air reservoir;
h) the electronic module control unit (24c, 24d) being so designed that it controls the module solenoid-valve device (22c, 22d) dependent on the at least one actual level signal and the at least one reference level signal in such a manner that the actual level of the at least one portion of the chassis is adjusted to the reference level by feeding compressed air from the at least one compressed-air reservoir to the at least one air bellows (12a, 12b) or by bleeding the at least one air bellows (12a, 12b) into a pressure sink (40c, 40d), **characterised in that**
i) the central electronic control unit (24c) and the electronic module control unit (24c, 24d) of the at least one electro-pneumatic air-suspension module (18, 20) are each connected to a dedicated air-suspension data bus (32) that is independent of at least one further data bus and communicate with one another exclusively via these dedicated air-suspension data buses (32), and that
j) the central electronic control unit (24c) represents a master control device and the electronic module control unit (24c, 24d) of the at least one electro-pneumatic air-suspension module (20) represents a corresponding slave control device, and
k) level regulation taking place locally or decentrally inside the at least one electro-pneumatic air-suspension module (18, 20).

2. A chassis air-suspension device according to claim 1, **characterised in that** the electro-pneumatic air-suspension module (18, 20) has a dedicated separate housing (26c, 26d) with at least the following ports:
a) at least one electrical signal port (28c, 28da, 28db) for sending the at least one actual level signal;
b) at least one communication port (30c, 30d) for communication between the electronic module control unit (24c, 24d) on one hand and the central electronic control unit, a further module control unit (24c, 24d) of a further air-suspension module (18, 20) or a further electronic control unit on the other;
c) at least one electrical energy supply port (34c, 34d) by means of which the electro-pneumatic air-suspension module (18, 20) is supplied with electrical energy;
d) at least one pneumatic compressed-air supply port (36c, 36d) by means of which the electro-pneumatic air-suspension module (18, 20) is supplied with compressed air from the at least one compressed-air reservoir;
e) at least one pneumatic bleed port (38c, 38d) by means of which module solenoid-valve device (22c, 22d) is connected to the pressure sink (40c, 40d);
f) at least one pneumatic air-bellows port (42c, 42d, 44c, 44d) to which the at least one air bellows (12a, 12b) is connected.

3. A chassis air-suspension device according to claim 2, **characterised in that** integrated in the at least one electro-pneumatic air-suspension module (18, 20) is at least one pressure sensor (50c, 52d, 54d) that measures the actual pressure prevailing at the at least one pneumatic air-bellows port (42c, 42d, 44c, 44d) and sends an actual pressure signal representing this actual pressure to the electronic module control unit (24c, 24d), which is designed to adjust the actual pressure to a predetermined reference pressure by actuating the module solenoid-valve device.

4. A chassis air-suspension device according to any one of the preceding claims, **characterised in that** the electro-pneumatic air-suspension module (18, 20) is configured as:
a) a single-channel module that regulates the level of at least one portion of the chassis in one channel, or as
b) a 2-channel module that regulates the level of at least two portions of the chassis in two channels, or as
c) a 3-channel module that regulates the level of at least three portions of the chassis in three channels, or as
d) a 4-channel module that regulates the level of at least four portions of the chassis in four channels, or as
e) a kneeling module that regulates the level of portions of the chassis arranged on difference sides of the vehicle.

5. A chassis air-suspension device according to any one of the preceding claims, **characterised in that** the at least one portion of the chassis is arranged in the region of a wheel (10) driven by the running gear or in the region of an axle (4, 6, 8) of the running gear.

6. A chassis air-suspension device according to any one of the preceding claims, **characterised in that** the central electronic control unit (24c) takes the form of an electronic module control unit of an electro-pneumatic air-bellows module (18).

7. A chassis air-suspension device according to any one of the preceding claims, **characterised in that** the central electronic control unit (24c) generates the reference level signal characterising the reference level of the at least one portion of the chassis on the basis of a value that originates in an external operator control unit (56), a man-machine interface or a memory of the central electronic control unit.

8. A chassis air-suspension device according to claim 7, **characterised in that** the external operator control unit (56) cooperates with the central electronic control unit (24c) in such a manner that at measured speeds below a predetermined speed limit the reference level of the at least one portion of the chassis can be changed by means of the external operator control unit (56).

9. A chassis air-suspension device according to any one of the preceding claims, **characterised in that** the module solenoid-valve device (22c, 22d) comprises at least one electromagnetic valve.

10. A vehicle (2) having a chassis air-suspension device (1) according to any one of the preceding claims.

## Revendications

1. Dispositif (1) de suspension pneumatique de châssis pour le soutien d'un châssis d'un véhicule (2) utilitaire sur un train de roulement y compris régulation de niveau, qui comporte au moins ce qui suit :
a) au moins un appareil (24c) électronique central de commande, qui prescrit un signal de niveau de consigne caractérisant un niveau de consigne d'au moins une partie du châssis,
b) au moins un capteur (14, 16a, 16b) de niveau, qui produit un signal de niveau réel caractérisant un niveau réel d'au moins une partie du châssis,
c) au moins un soufflet (12a, 12b) à ressort pneumatique, par lequel la au moins une parte du châssis est soutenue par rapport au train de roulement,
d) au moins un réservoir d'air comprimé, dans lequel
e) le dispositif (1) de suspension pneumatique du châssis est constitué de manière modulaire et comporte comme module au moins l'appareil (24c) électronique central de commande, et en outre au moins un module (18, 20) de suspension pneumatique électropneumatique réalisé en unité de construction distincte, dans lequel
f) le au moins un module (18, 20) de suspension pneumatique électropneumatique est pourvu d'un dispositif (22c, 22d) intégré module - électrovanne et d'un module - appareil de commande (24c, 24d) électronique intégré commandant dans le dispositif module - électrovanne (22c, 22d), dans lequel le module - appareil de commande (24c, 24d) électronique traite le au moins un signal de niveau de consigne et le au moins un signal de niveau réel, et dans lequel
g) le dispositif module - électrovanne (22c, 22d) est raccordé au au moins un soufflet (12a, 12b) à ressort pneumatique ainsi qu'au au moins un réservoir d'air comprimé, et dans lequel
h) le module - appareil de commande (24c, 24d) électronique est constitué de manière à commander le dispositif (22c, 22d) module - électrovanne en fonction du au moins un signal de niveau réel et du au moins un signal de niveau de consigne, de manière à adapter, en alimentant le au moins un soufflet (12a, 12b) à ressort pneumatique en air comprimé, à partir du au moins un réservoir d'air comprimé, ou en enlevant l'air du au moins un soufflet (12a, 12b) à ressort pneumatique dans un puits (40c, 40d) de pression, le niveau réel d'au moins une partie du châssis au niveau de consigne, **caractérisé en ce que**
i) l'appareil de commande (24c) électronique central et le module - appareil de commande (24c, 24d) électronique du au moins un module (18, 20) de suspension pneumatique électropneumatique sont raccordés à un propre bus (32) de données de suspension pneumatique indépendant d'au moins un autre bus de données et communique entre eux, seulement par ce bus (32) de données propre de suspension pneumatique, et **en ce que**
j) l'appareil de commande (24c) électronique central représente un appareil de commande maître et, par rapport à celui-ci, le module - appareil de commande (24c, 24d) électronique du au moins un module (20) de suspension pneumatique électropneumatique représente un appareil de commande esclave, et dans lequel
k) la régulation de niveau a lieu localement et de manière décentralisée au sein du au moins un module (18, 20) de suspension pneumatique électropneumatique.

2. Dispositif de suspension pneumatique de châssis suivant la revendication 1, **caractérisé en ce que** le module (18, 20) de suspension pneumatique électropneumatique a un boîtier (26c, 26d) propre distinct ayant au moins les raccords suivants :
a) au moins un raccord (28c, 28da, 28db) de signal électrique pour l'entrée du au moins un signal de niveau réel,
b) au moins un raccord (30c, 30d) de communication pour la communication du module - appareil de commande (24c, 24d) électronique avec l'appareil de commande électronique central, avec un autre module - appareil de commande (24c, 24d) d'un autre module (18, 20) de suspension pneumatique ou avec un autre appareil de commande électronique,
c) au moins un raccord (34c, 34d) d'alimentation en énergie électrique, par lequel le module (18, 20) de suspension pneumatique électropneumatique est alimenté en énergie électrique,
d) au moins un raccord (36c, 36d) pneumatique d'alimentation en air comprimé, par lequel le module (18, 20) de suspension pneumatique électropneumatique est alimenté en air comprimé provenant du au moins un réservoir d'air comprimé,
e) au moins un raccord (38c, 38d) pneumatique de purge, par lequel le dispositif (22c, 22d) module - électrovanne est relié au puits (40c, 40d) de pression,
f) au moins un raccord (42c, 42d, 44c, 44d) pneumatique de soufflet à ressort pneumatique, auquel au moins un soufflet (12a, 12b) à ressort pneumatique est raccordé.

3. Dispositif de suspension pneumatique de châssis suivant la revendication 2, **caractérisé en ce que** dans le au moins un module (18, 20) de suspension pneumatique électropneumatique est intégré au moins un capteur (50c, 52d, 54d) de pression, qui mesure la pression réelle s'appliquant au au moins un raccord (42c, 42d, 44c, 44d) pneumatique de soufflet à ressort pneumatique et entre ce signal de pression réelle représentant la pression réelle dans le module - appareil de commande (24c, 24d) électronique, lequel est constitué pour adapter la pression réelle à une pression de consigne donnée à l'avance par une commande du dispositif module - électrovanne.

4. Dispositif de suspension pneumatique de châssis suivant l'une des revendications précédentes, **caractérisé en ce que** le module (18, 20) de suspension pneumatique électropneumatique est constitué sous la forme de
a) un module à un canal, qui règle dans un canal le niveau d'une partie du châssis, ou
b) un module à deux canaux, qui règle dans deux canaux le niveau d'au moins deux parties du châssis, ou
c) un module à trois canaux, qui règle dans trois canaux le niveau d'au moins trois parties du châssis, ou
d) un module à quatre canaux, qui règle dans quatre canaux le niveau d'au moins quatre parties du châssis, ou
e) un module kneeling, qui règle le niveau de parties du châssis disposées sur des parties différentes du véhicule.

5. Dispositif de suspension pneumatique de châssis suivant l'une des revendications précédentes, **caractérisé en ce que** la au moins une partie du châssis est disposée dans la zone d'une roue (10) guidée par le train de roulement ou dans la zone d'un essieu (4, 6, 8) du train de roulement.

6. Dispositif de suspension pneumatique de châssis suivant l'une des revendications précédentes, **caractérisé en ce que** l'appareil (24c) de commande électronique central est formé d'un module - appareil de commande électronique d'un module (18) de suspension pneumatique électropneumatique.

7. Dispositif de suspension pneumatique de châssis suivant l'une des revendications précédentes, **caractérisé en ce que** l'appareil (24c) de commande électronique central produit le signal de niveau de consigne caractérisant le niveau de consigne d'au moins une partie du châssis sur la base d'une valeur, qui provient d'une unité (56) extérieure de service d'une interface homme - machine ou d'une mémoire de l'appareil de commande électronique central.

8. Dispositif de suspension pneumatique de châssis suivant la revendication 7, **caractérisé en ce que** l'unité (56) extérieure de service coopère avec l'appareil (24c) de commande électronique central, de manière à pouvoir, si l'on détecte des vitesses du véhicule en-dessous d'un seuil de vitesse donné à l'avance, modifier le niveau de consigne d'au moins une partie du châssis au moyen de l'unité (56) extérieure de service.

9. Dispositif de suspension pneumatique de châssis suivant l'une des revendications précédentes, **caractérisé en ce que** le dispositif module - électrovanne (22c, 22d) comprend au moins une vanne électromagnétique.

10. Véhicule (2) ayant un dispositif (1) de suspension de châssis suivant l'une des revendications précédentes.
